# EUROPEAN PATENT SPECIFICATION

(11) **EP 4 450 821 B1**
(45) Date of publication and mention of the grant of the patent: **26.11.2025**
(21) Application number: 24160119.4
(22) Date of filing: 28.02.2024
(51) Int. Cl.: F04D 25/08, F04D 29/70, F04D 15/00, F24F 6/14

(54) **SPRAY FAN**
SPRÜHGEBLÄSE
VENTILATEUR DE PULVÉRISATION

(30) Priority: 20.04.2023 CN 202310429885
(43) Date of publication of application: 23.10.2024
(73) Proprietor: Nanjing Chervon Industry Co., Ltd., Nanjing, Jiangsu 211106 (CN)
(72) Inventor: CAO, Pengpeng, Nanjing (CN); DONG, Jianxun, Nanjing (CN); CHEN, Zhijun, Nanjing (CN)
(74) Representative: Sun, Yiming

(56) References cited:
- FR-A1- 2 835 750
- JP-A- 2019 086 276
- KR-B1- 102 096 783
- US-A1- 2003 062 497
- US-A1- 2021 310 718
- US-A1- 2022 080 437
- US-B1- 6 237 896

## Description

### TECHNICAL FIELD

The present invention relates to the field of fan technology and, in particular, to a spray fan.

### BACKGROUND

For a cooling purpose in hot weather, spray fans are often used to send out water mist through a wind to achieve a cooling effect. A spray fan has a nozzle and a water inlet pipe, where the water inlet pipe has an end connected to the nozzle and is connected to a water source through a distribution pipe, and the other end of the water inlet pipe is connected to a water pump that pumps the water source to the nozzle. The water source of the spray fan includes static water (such as a bucket) and dynamic water (such as tap water). The dynamic water source has a high water pressure, which may shorten a lifetime of the water pump.

US 2021310718 A1 discloses a necklace misting fan including a housing, a water reservoir, spray pump system, power supply, fan, and motor within the housing, an air inlet on a front side of the housing, and an air outlet on a top side of the housing. A fan power switch and a spray pump actuator are mounted to the housing. A spray nozzle on the top side of the housing horizontally spaced from the air outlet, is adapted and configured to emit a water spray generally vertically upward and obliquely to a generally vertical upward discharge air stream from the air outlet, when the spray pump actuator is actuated.

US 2022080437 A1 discloses a misting fan including a nozzle, a fan assembly, and a support assembly. The nozzle is configured to spray water. The support assembly is formed with a coupling portion for detachably coupling a battery pack. The nozzle is disposed on the fan assembly or the support assembly and includes a nozzle body and a second part. The nozzle body includes a first part formed with a first surface and the second part is detachably installed to the nozzle body and formed with a second surface. When the second part is installed to the nozzle body, a water flow channel is formed between the second surface and the first surface. When the second part is detached from the nozzle body, the first surface is at least partially exposed for cleaning access.

US 6237896 B1 discloses a portable fan with misting nozzles for providing a cooling mist to the air flow of a fan. The portable fan with misting nozzles includes a fan assembly adapted for creating an air flow. A water supply assembly for storing water. A plurality of nozzles adapted for spraying a mist of water into the air flow of the fan assembly. The nozzles are in fluid communication with the water supply assembly. The nozzles are coupled to the fan assembly.

KR 102096783 B1 discloses a portable handheld fan comprising a rotary blade, a motor connected to the rotary blade, a protective net for protecting the rotary blade and the motor, and a handle having a built-in battery for driving the motor and connected to the protective net.

JP 2019 086276 A discloses a mist generating apparatus which generates mist inside the impeller of a cross-flow fan equipped with a mist generating mechanism.

### SUMMARY

An object of the present application is to provide a spray fan which can reduce an effect of pressure of a water source on a water pump and extend a service life of the water pump.

To achieve the object, the invention is set out in the appended set of claims.

The present invention has the beneficial effects below.

The spray fan of the present invention is provided with the adjustment device which can adjust the flowrate or pressure of the liquid, thereby reducing the effect of the pressure of the water source on the water pump and extending the service life of the water pump.

### BRIEF DESCRIPTION OF DRAWINGS

FIG. 1 is a structural view of a spray fan according to the present invention.
FIG. 2 is a first structural view of a first connector, a second connector, and a water pipe connector involved in the present invention.
FIG. 3 is a structural view of the first connector involved in FIG. 2.
FIG. 4 is a second structural view of a first connector, a second connector, and a water pipe connector involved in the present invention.
FIG. 5 is a structural view of the first connector involved in FIG. 4.
FIG. 6 is a structural view of a second connector involved in the present invention.
FIG. 7 is a structural view of a static water pipe connector involved in the present invention.
FIG. 8 is a structural view of a dynamic water pipe connector involved in the present invention.
FIG. 9 is an exploded view of a relief valve.
FIG. 10 is a sectional view of a relief valve.

### DETAILED DESCRIPTION

Before any examples of this invention are explained in detail, it is to be understood that this invention is not limited to its application to the structural details and the arrangement of components set forth in the following description or illustrated in the above drawings.

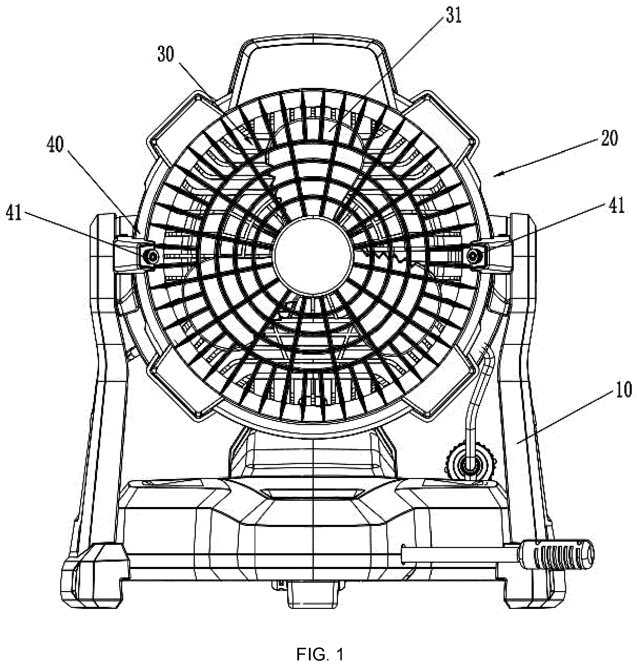

As shown in FIGS. 1 to 10, the present invention provides a spray fan that implements blowing and spraying functions to blow out a wind with water mist and can cool and humidify a preset field. A water source of the spray fan includes a static water source (such as water in a bucket) and a dynamic water source (such as tap water).

Specifically, referring to FIG. 1, the spray fan includes a rack 10, a housing assembly 20, a fan assembly 30, and a spray head assembly 40. The housing assembly 20 is connected to the rack 10 and forms an accommodation space, and the fan assembly 30 is disposed in the accommodation space. The fan assembly 30 includes fan blades 31 and an electric motor, where the electric motor is configured to drive the fan blades 31 to rotate about an axis of the electric motor. The electric motor is sealed by a waterproof material, so as to prevent water mist from entering the electric motor under the action of an environment or the like. Specifically, the waterproof material may be, for example, a plastic film, and the electric motor is sealed by the plastic film through a process such as hot blast.

The spray head assembly 40 includes at least one jet 41, where the jet 41 is configured to spray water mist and mounted to the rack 10, the housing assembly 20, or the fan assembly 30. After the spray fan is started, the water mist is sprayed from the jet 41 into an ambient environment, and the fan blades 31 rotate to generate an air flow to blow the water mist sprayed from the jet 41 into the air, thereby reducing the temperature of the air in the environment. It is to be understood that the jet 41 is connected to a water pipe assembly, the water pipe assembly includes a water pump and a water outlet pipe, and the water outlet pipe connects the water pump to the jet 41. Water is drawn into the water outlet pipe under the action of the water pump and can be transported to the jet 41 in a high pressure state, so as to be sprayed in an atomized state. The water pump may be a vane pump such as a centrifugal pump, an axial-flow pump, or a mixed flow pump or may be a positive-displacement pump such as a piston pump, a diaphragm pump, or a gear pump.

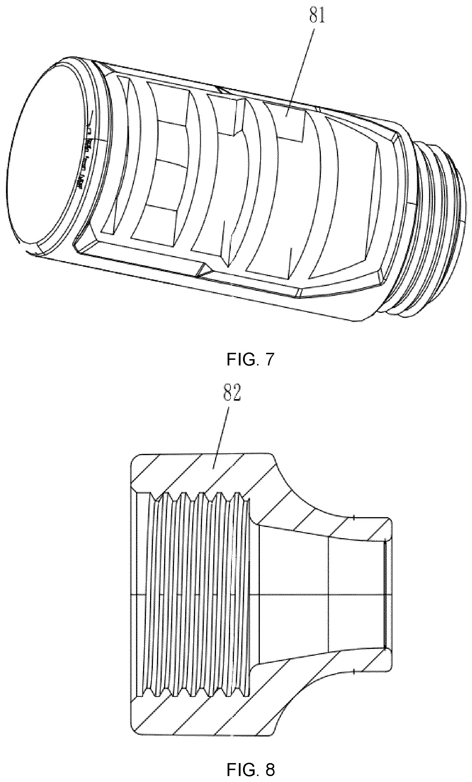

The spray fan further includes a water inlet pipe, where a rear end of the water inlet pipe is connected to the water pump through a pipeline, and a head end of the water inlet pipe extends outward from the spray fan and is connected to the water source. The water inlet pipe is connected to a first external water source or a second external water source by being mounted with different connectors. The first external water source is the static water source, and the second external water source is the dynamic water source. The static water source may be understood as water accommodated in a container, such as the water in the bucket. The dynamic water source may be understood as water having a certain flowrate, such as the tap water. The dynamic water source is generally accompanied with a water distribution pipe, such as a tap water pipe. The water distribution pipe is detachably connected to the water inlet pipe. A water pipe connector is provided on the water inlet pipe, where the water pipe connector includes a dynamic water pipe connector 82 and a static water pipe connector 81. Referring to FIG. 7, when the water inlet pipe is connected to the static water source, the static water pipe connector 81 is mounted to the water inlet pipe. Referring to FIG. 8, when the water inlet pipe is connected to the dynamic water source, the dynamic water pipe connector 82 is mounted to the water inlet pipe. Both the static 6 water pipe connector 81 and the dynamic water pipe connector 82 are existing structures, and the details are not repeated here.

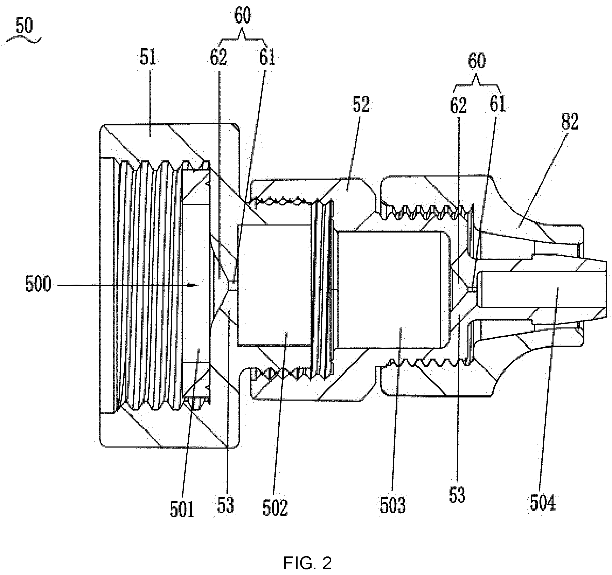

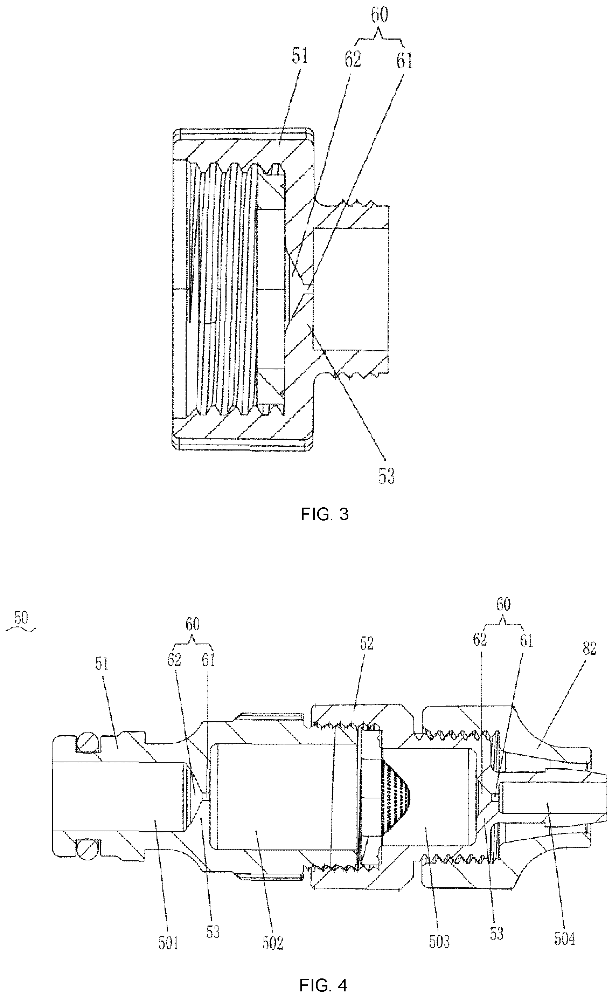

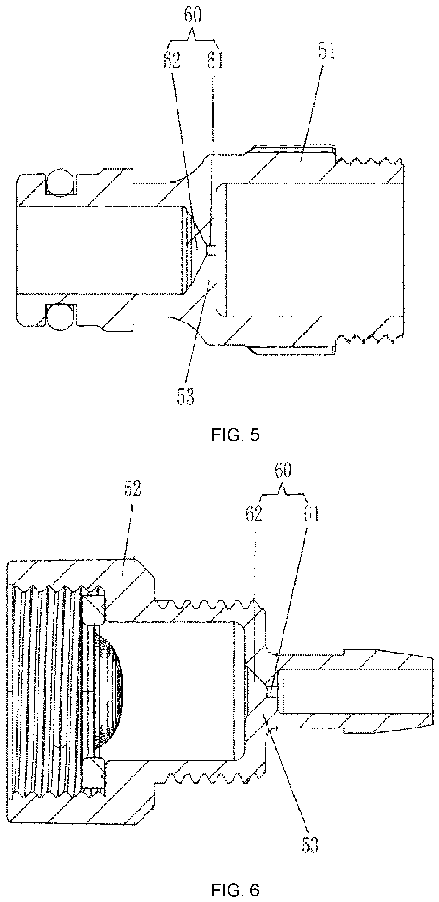

When the dynamic water source is connected, an adjustment device 50 is provided at a connection between the water inlet pipe and the water distribution pipe, where the adjustment device 50 is configured to adjust a flowrate of a liquid flowing in the spray fan. Referring to FIGS. 2 to 6, the adjustment device 50 includes a first connector 51 disposed at a rear end of the water distribution pipe and a second connector 52 disposed at the head end of the water inlet pipe. It is to be understood that the second connector 52 is connected to the dynamic water pipe connector 82 at the head end of the water inlet pipe. The first connector 51 and the second connector 52 are configured to be structures detachably connected to each other. Specifically, the connection may be implemented in a threaded manner or in a snap-fit or plug-in manner, which is not limited here. Referring to FIGS. 2 and 3, the first connector 51 may adopt an American standard male connector. Referring to FIGS. 4 and 5, the first connector 51 may also adopt a European standard male connector. Referring to FIG. 6, the second connector 52 is a female connector mating with the male connector.

The adjustment device includes a channel 500 for the liquid to flow through, and a flowrate and pressure of the liquid flowing through the channel 500 decrease and then increase. The adjustment device adjusts the flowrate and the pressure of the liquid, thereby reducing an effect of pressure of the water source on the water pump and extending a service life of the water pump. According to the invention, the adjustment device 50 is disposed upstream of the water pump. In other examples which are not part of the claimed invention, the adjustment device 50 may be disposed downstream of the water pump.

With continued reference to FIGS. 2 to 6, the channel 500 is provided with an adjustment hole 60 whose cross-section changes such that the flowrate and the pressure of the liquid flowing through the channel 500 decrease and then increase. The flowrate and the pressure of the liquid can be controlled by the adjustment hole 60, so as to achieve speed regulation and pressure regulation. The ratio of the length to the diameter of the adjustment hole 60 is less than or equal to 0.5. In some examples, the ratio of the length to the diameter of the adjustment hole 60 is greater than 4. In some examples, the ratio of the length to the diameter of the adjustment hole 60 is greater than 0.5 and less than or equal to 4. When the liquid originally having a relatively large flowrate passes through the adjustment hole 60, the liquid is blocked at the adjustment hole 60. Since the liquid cannot change a direction suddenly, a pressure loss occurs in a process in which the liquid shrinks at the adjustment hole 60 and then diffuses after flowing out of the adjustment hole 60, and the flowrate of the liquid decreases after the liquid flows out of the adjustment hole 60. It is to be noted that the first connector 51 and the second connector 52 are each provided with a wall 53, the adjustment hole 60 is defined on the wall 53, and the wall thickness of the wall 53 is the length of the adjustment hole 60.

The jet 41 has a cross-section, and the liquid is sprayed from the jet 41 after passing through the cross-section of the jet 41. A total area of the cross-section of the at least one jet 41 is a sum of cross-sections of all jets 41. The ratio of the area of the cross-section of the adjustment hole 60 to the total area of the cross-section of the at least one jet 41 is greater than 1 and less than or equal to 45. **In** some examples, the ratio of the area of the cross-section of the adjustment hole 60 to the total area of the cross-section of the at least one jet 41 is greater than 1.1 and less than or equal to 20. **In** some examples, the ratio of the area of the cross-section of the adjustment hole 60 to the total area of the cross-section of the at least one jet 41 is greater than 1.2 and less than or equal to 10. In this example, the diameter of the adjustment hole 60 is greater than or equal to 0.1 mm and less than or equal to 6 mm. In some examples, the diameter of the adjustment hole 60 is greater than or equal to 0.4 mm and less than or equal to 3 mm. In some examples, the diameter of the adjustment hole 60 is greater than or equal to 0.6 mm and less than or equal to 1.2 mm.

In some examples which are not part of the claimed invention, one adjustment hole 60 is provided. The channel 500 includes a first cavity 501 and a second cavity 502. The liquid has a first flowrate when flowing through the first cavity 501 and has a second flowrate when flowing through the second cavity 502. The first flowrate is basically the same as a flowrate of water in the tap water pipe. The ratio of the first flowrate to the second flowrate is greater than or equal to 14:1 and less than or equal to 30:1. The first flowrate is far greater than the second flowrate, and it can be seen that the dynamic water source has a greatly decreased water flowrate after passing through the adjustment hole 60. A flowrate of the liquid flowing through the adjustment hole 60 is greater than or equal to 3 L/min and less than or equal to 30 L/min. In some examples, the flowrate of the liquid flowing through the adjustment hole 60 is greater than or equal to 0.5 L/min and less than or equal to 25 L/min. In some examples, the flowrate of the liquid flowing through the adjustment hole 60 is greater than or equal to 0.6 L/min and less than or equal to 22 L/min.

According to the invention, two adjustment holes 60 are provided, and the liquid in the channel 500 flows through the two adjustment holes 60 in sequence. The flowrate of the liquid flowing through the channel 500 decreases and then increases and decreases and then increases for the second time. In addition to the first cavity 501 and the second cavity 502, the channel 500 further includes a third cavity 503 and a fourth cavity 504. The liquid has the first flowrate when flowing through the first cavity 501, has the second flowrate when flowing through the second cavity 502 and the third cavity 503, and has a third flowrate when flowing through the fourth cavity 504. The ratio of the first flowrate to the second flowrate is greater than or equal to 14:1 and less than or equal to 30:1. The ratio of the second flowrate to the third flowrate is greater than 1:1 and less than or equal to 7:3. The dynamic water source has a significantly decreased water flowrate after passing through the first adjustment hole 60 and a re-decreased water flowrate after passing through the second adjustment hole 60. The flowrate of the liquid is decreased twice when the liquid flows through the channel 500. The flowrate of the liquid gradually decreases, achieving a better throttling effect. Specifically, the first flowrate is greater than or equal to 20 L/min and less than or equal to 22 L/min, the second flowrate is greater than or equal to 0.9 L/min and less than or equal to 1.4 L/min, and the third flowrate is greater than or equal to 0.6 L/min and less than 0.9 L/min.

The adjustment hole 60 includes a guide portion 62 and a straight portion 61. The guide portion 62 is disposed at an upstream position of the adjustment hole 60. The guide portion 62 is funnel-shaped, and the straight portion 61 is cylindrical. The diameter of a tip of the guide portion 62 is equal to the diameter of the straight portion 61, and the tip of the guide portion 62 is connected to the straight portion 61. The guide portion 62 is located at the upstream position of the adjustment hole 60. When the liquid flows through the channel 500, the liquid flows through the guide portion 62 first and then flows through the straight portion 61 so that the flowrate of the liquid can be gradually decreased under the guidance of the guide portion 62 until the liquid flows to the straight portion 61, thereby improving smoothness of the liquid flowing to the straight portion 61. The guide portion 62 is funnel-shaped to facilitate machining and save a cost.

The preceding adjustment device is disposed so that water pressure at the output of the water pump is reduced to a value less than or equal to 1.2 Mpa. The water pressure at a water outlet of the water pump is small so that the water flow impacts on the water pump weakly, and the water pump is not easily damaged and has a long lifetime.

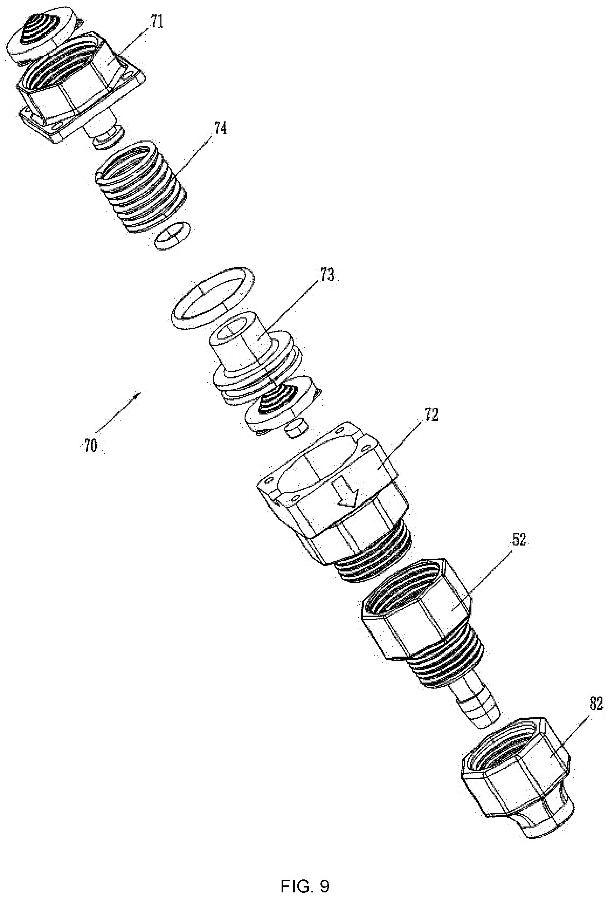

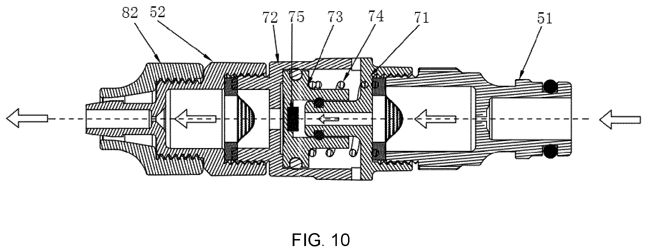

Referring to FIGS. 9 and 10, the spray fan further includes a relief valve 70 disposed upstream of the water pump, where the relief valve 70 has a piston 73, a spring 74 acts on the piston 73, and the spring 74 is configured to keep the piston 73 at a certain distance from a water inlet end of the relief valve 70. When backpressure at the water pump exceeds a set value, the piston 73 of the relief valve 70 retreats against the spring 74 so that a rubber plug 75 inside the piston 73 blocks the output of the water inlet end of the relief valve 70, so as to keep the pressure at the water pump at a stable pressure value. When the pressure at the water pump decreases, the spring 74 pushes the piston 73 forward to reset the piston 73, and the external water source passes through the relief valve 70 and enters the water pump at the rear end. The preceding action principle is repeated so that the water pump is kept in a zero-pressure state during normal operation.

In some examples, the relief valve 70 may be disposed between the first connector 51 and the second connector 52, and a valve body 71 at the water inlet end of the relief valve 70 is detachably connected to the first connector 51, where the connection may be implemented in the threaded manner or in the snap-fit or plug-in manner, which is not limited here; and a valve body 72 at a water outlet end of the relief valve 70 is detachably connected to the second connector 52, where the connection may also be implemented in the threaded manner or in the snap-fit or plug-in manner, which is not limited here. Of course, the position of the relief valve 70 is not limited to this so long as it is ensured that the relief valve 70 is disposed upstream of the water pump.

The basic principles, main features, and advantages of this invention are shown and described above. It is to be understood by those skilled in the art that the aforementioned examples do not limit the scope of the present invention in any form, which is solely defined by the claims.

## Claims

1. A spray fan, comprising:
a fan assembly (30) comprising a plurality of fan blades (31);
an electric motor for driving the fan blades to rotate;
a spray head assembly (40) configured to spray a liquid; and
a water pump configured to deliver the liquid;
wherein the spray fan further comprises:
an adjustment device (50) configured to adjust a flowrate of the liquid and comprising a channel (500) for the liquid to flow through, wherein the channel is provided with an adjustment hole (60), the adjustment hole comprises a straight portion (61) and a funnel-shaped guide portion (62), and the guide portion is located at an upstream position of the adjustment hole relative to the straight portion,
wherein the spray fan comprises a water inlet pipe, the adjustment device comprises a first connector (51) and a second connector (52), the first connector is configured to be connected to a water distribution pipe and the second connector is connected to the water inlet pipe,
wherein a rear end of the water inlet pipe is connected to the water pump through a pipeline, and a head end of the water inlet pipe extends outward from the spray fan and is connected to the water source, and
wherein the first connector and the second connector are provided with the adjustment hole,
**characterized in that**,
the first connector and the second connector are detachably connected, and **in that** the funnel-shaped guide portion of each adjustment hole has a cross-section direction. which reduces in the flow

2. The spray fan according to claim 1, wherein a diameter of the adjustment hole is greater than or equal to 0.1 mm and less than or equal to 6 mm.

3. The spray fan according to claim 1, wherein the spray head assembly comprises at least one jet (41), and a ratio of an area of the cross-section of the adjustment hole to a total area of a cross-section of the at least one jet is greater than 1 and less than or equal to 45.

4. The spray fan according to claim 1, wherein a flowrate of the liquid flowing through the adjustment hole is greater than or equal to 3 L/min and less than or equal to 30 L/min.

5. The spray fan according to claim 1, wherein the adjustment device is disposed so that a water pressure at an output of the water pump is less than or equal to 1.2 Mpa.

6. The spray fan according to claim 1, wherein a ratio of a length to a diameter of the adjustment hole is less than or equal to 0.5.

7. The spray fan according to claim 1, further comprising a relief valve (70) disposed upstream of the water pump, wherein the relief valve has a piston (73) and a spring (74), wherein the spring acts on the piston, and wherein the spring is configured to keep the piston at a certain distance from a water inlet end of the relief valve;
wherein, when backpressure at the water pump exceeds a set value, the piston of the relief valve retreats against the spring so that a rubber plug (75) inside the piston blocks an output of the water inlet end of the relief valve, so as to keep the pressure at the water pump at a stable pressure value.

## Patentansprüche

1. Sprühventilator, umfassend:
eine Ventilatorbaugruppe (30), die eine Mehrzahl von Ventilatorflügeln (31) umfasst;
einen Elektromotor zum Antreiben der Ventilatorflügel in Rotation;
eine Sprühkopfbaugruppe (40), die dazu eingerichtet ist, eine Flüssigkeit zu versprühen; und
eine Wasserpumpe, die dazu eingerichtet ist, die Flüssigkeit zu fördern;
wobei der Sprühventilator ferner umfasst:
eine Einstellvorrichtung (50), die dazu eingerichtet ist, eine Durchflussrate der Flüssigkeit einzustellen und einen Kanal (500) zum Durchströmen der Flüssigkeit umfasst, wobei der Kanal mit einer Einstellbohrung (60) versehen ist, die Einstellbohrung einen geraden Abschnitt (61) und einen trichterförmigen Führungsabschnitt (62) umfasst, und der Führungsabschnitt stromaufwärts der Einstellbohrung relativ zu dem geraden Abschnitt angeordnet ist,
wobei der Sprühventilator ein Wasserzulaufrohr umfasst, die Einstellvorrichtung einen ersten Anschluss (51) und einen zweiten Anschluss (52) umfasst, der erste Anschluss dazu eingerichtet ist, mit einer Wasserverteilerleitung verbunden zu werden, und der zweite Anschluss mit dem Wasserzulaufrohr verbunden ist,
wobei ein hinteres Ende des Wasserzulaufrohrs über eine Rohrleitung mit der Wasserpumpe verbunden ist und ein vorderes Ende des Wasserzulaufrohrs aus dem Sprühventilator nach außen herausragt und mit der Wasserquelle verbunden ist, und
wobei der erste Anschluss und der zweite Anschluss mit der Einstellbohrung versehen sind,
**dadurch gekennzeichnet, dass**
der erste Anschluss und der zweite Anschluss lösbar miteinander verbunden sind und dass der trichterförmige Führungsabschnitt jeder Einstellbohrung einen Querschnitt aufweist, der sich in Strömungsrichtung verringert.

2. Sprühventilator nach Anspruch 1, wobei ein Durchmesser der Einstellbohrung größer oder gleich 0,1 mm und kleiner oder gleich 6 mm ist.

3. Sprühventilator nach Anspruch 1, wobei die Sprühkopfbaugruppe mindestens eine Düse (41) umfasst und ein Verhältnis einer Querschnittsfläche der Einstellbohrung zu einer Gesamtquerschnittsfläche der mindestens einen Düse größer als 1 und kleiner oder gleich 45 ist.

4. Sprühventilator nach Anspruch 1, wobei eine Durchflussrate der durch die Einstellbohrung strömenden Flüssigkeit größer oder gleich 3 L/min und kleiner oder gleich 30 L/min ist.

5. Sprühventilator nach Anspruch 1, wobei die Einstellvorrichtung so angeordnet ist, dass ein Wasserdruck am Ausgang der Wasserpumpe kleiner oder gleich 1,2 MPa ist.

6. Sprühventilator nach Anspruch 1, wobei ein Verhältnis einer Länge zu einem Durchmesser der Einstellbohrung kleiner oder gleich 0,5 ist.

7. Sprühventilator nach Anspruch 1, ferner umfassend ein Überdruckventil (70), das stromaufwärts der Wasserpumpe angeordnet ist, wobei das Überdruckventil einen Kolben (73) und eine Feder (74) aufweist, wobei die Feder auf den Kolben wirkt und dazu eingerichtet ist, den Kolben in einem bestimmten Abstand von einem Wassereinlassende des Überdruckventils zu halten;
wobei, wenn ein Rückdruck an der Wasserpumpe einen Sollwert überschreitet, der Kolben des Überdruckventils gegen die Feder zurückweicht, sodass ein Gummistopfen (75) innerhalb des Kolbens einen Ausgang des Wassereinlassendes des Überdruckventils blockiert, um den Druck an der Wasserpumpe auf einem stabilen Druckwert zu halten.

## Revendications

1. Ventilateur de pulvérisation, comprenant :
un ensemble ventilateur (30) comprenant une pluralité de pales de ventilateur (31) ;
un moteur électrique destiné à entraîner les pales de ventilateur en rotation ;
un ensemble tête de pulvérisation (40) conçu pour pulvériser un liquide ; et
une pompe à eau conçue pour acheminer le liquide ;
dans lequel le ventilateur de pulvérisation comprend en outre :
un dispositif de réglage (50) conçu pour régler un débit du liquide et comprenant un canal (500) pour l'écoulement du liquide, le canal étant pourvu d'un orifice de réglage (60), l'orifice de réglage comprenant une portion rectiligne (61) et une portion de guidage en forme d'entonnoir (62), la portion de guidage étant située en amont de l'orifice de réglage par rapport à la portion rectiligne,
dans lequel le ventilateur de pulvérisation comprend un tuyau d'admission d'eau, le dispositif de réglage comprend un premier raccord (51) et un deuxième raccord (52), le premier raccord étant conçu pour être relié à une conduite de distribution d'eau et le deuxième raccord étant relié au tuyau d'admission d'eau,
dans lequel une extrémité arrière du tuyau d'admission d'eau est reliée à la pompe à eau par une canalisation, et une extrémité avant du tuyau d'admission d'eau s'étend vers l'extérieur à partir du ventilateur de pulvérisation et est reliée à la source d'eau, et
dans lequel le premier raccord et le deuxième raccord sont pourvus de l'orifice de réglage,
**caractérisé en ce que**
le premier raccord et le deuxième raccord sont reliés de manière amovible, et **en ce que** la portion de guidage en forme d'entonnoir de chaque orifice de réglage présente une section qui diminue dans le sens d'écoulement.

2. Ventilateur de pulvérisation selon la revendication 1, dans lequel un diamètre de l'orifice de réglage est supérieur ou égal à 0,1 mm et inférieur ou égal à 6 mm.

3. Ventilateur de pulvérisation selon la revendication 1, dans lequel l'ensemble tête de pulvérisation comprend au moins un ajutage (41), et un rapport d'une aire de section de l'orifice de réglage à une aire totale de section du ou des ajutages est supérieur à 1 et inférieur ou égal à 45.

4. Ventilateur de pulvérisation selon la revendication 1, dans lequel un débit du liquide traversant l'orifice de réglage est supérieur ou égal à 3 L/min et inférieur ou égal à 30 L/min.

5. Ventilateur de pulvérisation selon la revendication 1, dans lequel le dispositif de réglage est disposé de sorte qu'une pression d'eau à la sortie de la pompe à eau est inférieure ou égale à 1,2 MPa.

6. Ventilateur de pulvérisation selon la revendication 1, dans lequel un rapport d'une longueur à un diamètre de l'orifice de réglage est inférieur ou égal à 0,5.

7. Ventilateur de pulvérisation selon la revendication 1, comprenant en outre une soupape de décharge (70) disposée en amont de la pompe à eau, la soupape de décharge comportant un piston (73) et un ressort (74), le ressort agissant sur le piston et étant conçu pour maintenir le piston à une certaine distance d'une extrémité d'admission d'eau de la soupape de décharge ;
dans lequel, lorsque la contre-pression au niveau de la pompe à eau dépasse une valeur réglée, le piston de la soupape de décharge se rétracte contre le ressort de sorte qu'un bouchon en caoutchouc (75) à l'intérieur du piston obstrue une sortie de l'extrémité d'admission d'eau de la soupape de décharge, de manière à maintenir la pression au niveau de la pompe à eau à une valeur de pression stable.
